Europäisches Patentamt

European Patent Office

Office européen des brevets

(19)

(11) EP 0 538 129 B1

(12) FASCICULE DE BREVET EUROPEEN

(45) Date de publication et mention
de la délivrance du brevet:
**24.04.1996 Bulletin 1996/17**

(51) Int Cl.⁶: **G01V 1/02**

(21) Numéro de dépôt: **92402814.5**

(22) Date de dépôt: **15.10.1992**

(54) **Dispositif d'émission acoustique pour sismique marine**

Akustisches Sendegerät für meeresseismische Untersuchungen

Acoustic transmitting device for seismic marine surveying

(84) Etats contractants désignés:
**FR GB IT NL**

(30) Priorité: **17.10.1991 FR 9112812**

(43) Date de publication de la demande:
**21.04.1993 Bulletin 1993/16**

(73) Titulaire: **COMPAGNIE GENERALE DE GEOPHYSIQUE**
**F-91341 Massy Cédex (FR)**

(72) Inventeur: **Regnault, Michel**
**F-92160 Antony (FR)**

(74) Mandataire: **Schrimpf, Robert et al**
**Cabinet Regimbeau**
**26, Avenue Kléber**
**F-75116 Paris (FR)**

(56) Documents cités:
GB-A- 2 087 556      GB-A- 2 137 346
GB-A- 2 148 001      US-A- 4 146 870
US-A- 4 908 801

## Description

La présente invention concerne un dispositif d'émission acoustique pour sismique marine, destiné a émettre une onde acoustique dans une direction donnée, dispositif comportant, d'une part, une pluralité de sources immergées, mécaniquement reliées à au moins un moyen flotteur, et, d'autre part, un circuit de commande desdites sources comprenant une pluralité de moyens de retard aptes à appliquer respectivement à chaque source un retard de phase défini par une loi de phase nominale associée à ladite direction d'émission donnée.

L'invention s'applique tout particulièrement au domaine de la prospection géologique par sismique marine.

L'exploration géologique des fonds marins utilise généralement des navires remorquant des dispositifs d'émission acoustique tels que celui cité dans le préambule, qui émettent vers les fonds à explorer des ondes acoustiques dans différentes directions. Ces ondes acoustiques sont ensuite réfléchies par le sous-sol marin et détectées par des transducteurs disposés le long de câbles, ou flûtes sismiques, tirés également par le navire de prospection. L'analyse des ondes réfléchies par rapport aux ondes émises par les sources renseigne sur la structure, la nature et la composition des fonds étudiés. Pour un exemple de dispositif d'émission acoustique pour sismique marine, on pourra par exemple se référer à la demande de brevet GB-2 087 556.

Les sources utilisées dans les dispositifs d'émission acoustique pour sismique marine constituent souvent des sous-ensembles formant un réseau régulier de une à trois dimensions. Pour émettre une onde dans une direction donnée, on commande l'émission des sources selon une loi de phase qui régit les retards de phase à appliquer aux sources. Une loi de phase nominale est définie pour une configuration idéale des sources dans laquelle la surface de l'eau est plane et parfaitement calme. Par exemple, pour émettre dans ces conditions une onde dans la direction verticale, perpendiculaire à la surface de l'eau, la loi de phase nominale est uniforme en ce sens que l'émission des sources se fera en même temps. Par contre, une onde acoustique présentant une inclinaison donnée sera obtenue en décalant les émissions des sources consécutives les unes par rapport aux autres d'un retard de phase fonction de l'inclinaison recherchée, étant entendu que la direction d'émission est celle pour laquelle les ondes émises par toutes les sources se composent positivement.

Dans la pratique, les conditions réelles de prospection s'écartent de façon notable de la configuration idéale précitée permettant de définir la loi de phase nominale. En particulier, la surface de la mer présente souvent des instabilités à courte portée, telles que les vagues, dont la fréquence spatiale est égale ou supérieure à la distance entre deux sources consécutives au sein du sous-ensemble considéré. Ces instabilités de surface provoquent des mouvements pendulaires des sources, sans corrélation les uns avec les autres, qui ont pour effet de faire varier dans le temps la profondeur de chaque source. La position relative des sources par rapport à la surface s'en trouve donc affectée, avec pour conséquence que la loi de phase nominale ne correspond plus à la configuration réelle des sources. Aussi, ladite loi de phase nominale doit être corrigée en temps réel. Pour cela, on équipe chaque source d'un manomètre, par exemple, qui permet de connaître à chaque instant la profondeur exacte des sources par rapport à la surface et ainsi de connaître la position relative des sources entre elles. On en déduit alors les corrections nécessaires à apporter à la loi de phase pour tenir compte de ce type d'instabilités. Une méthode utilisant une telle mesure de profondeur, c'est-à-dire la mesure de la hauteur d'eau (piézométrie) correspondant à la profondeur de remorquage effective de chaque source, est décrite dans GB-2 148 001.

Toutefois, cette méthode de correction connue n'est pas utilisable dans le cas où la surface de l'eau tout en étant calme, c'est-à-dire sans vagues importantes, présente des ondulations de grande période spatiale dues au phénomène de houle. Dans ce cas, en effet, les sources ont une position relativement fixe par rapport à la surface et les manomètres des sources n'enregistrent aucune variation de pression et donc de profondeur. En conséquence, la loi de phase nominale n'est pas corrigée alors que les sources ne se trouvent pas dans la configuration idéale correspondante.

Aussi, le problème technique à résoudre par l'objet de la présente invention est de réaliser un dispositif d'émission acoustique pour sismique marine, conforme au préambule, dispositif qui permettrait de corriger la loi de phase nominale d'émission des sources des mouvements basse fréquence de la surface de l'eau.

Pour résoudre ce problème, l'invention propose un dispositif d'émission acoustique pour sismique marine, destiné à émettre une onde acoustique dans une direction donnée, comportant, d'une part, une pluralité de sources immergées, mécaniquement reliées à au moins un moyen flotteur, et, d'autre part, un circuit de commande desdites sources comprenant une pluralité de moyens de retard aptes à appliquer respectivement à chaque source un retard de phase défini par une loi de phase nominale associée à ladite direction d'émission donnée, ledit dispositif comportant au moins deux capteurs fournissant à des moyens de correction dudit circuit de commande des signaux représentatifs d'au moins un paramètre relatif à la position d'au moins deux desdites sources, lesdits moyens de correction fournissant aux moyens de retard, en fonction des signaux et des capteurs, un signal de correction de la loi de phase nominale, caractérisé en ce que lesdits capteurs sont des capteurs d'attitude qui fournissent aux moyens de correction des signaux représentatifs de la position absolue desdites sources, le signal de correction fourni par les moyens de correction aux moyens de retard étant représentatif des variations de la position relative desdites sources.

Ainsi, le dispositif de l'invention présente l'avantage, par rapport au procédé de correction connu mettant en oeuvre des manomètres, de déterminer la position relative des sources à partir d'une information directement liée à leur position absolue et non à une position prise relativement à une référence variable telle que la surface de l'eau.

La description qui va suivre en regard des dessins annexés, donnés à titre d'exemples non limitatifs, fera bien comprendre en quoi consiste l'invention et comment elle peut être réalisée.

La figure 1a est une vue de côté d'un premier mode de réalisation du dispositif d'émission acoustique de l'invention.

La figure 1b est un schéma d'un circuit de commande du dispositif de la figure 1a.

La figure 2a est une vue de côté d'un deuxième mode de réalisation du dispositif d'émission acoustique de l'invention.

La figure 2b est un schéma d'un circuit de commande du dispositif de la figure 2a.

La figure la montre un dispositif d'émission acoustique pour sismique marine, destiné à émettre une onde acoustique dans une direction D donnée. Ce dispositif comporte une pluralité de N sources immergées notées $100_1$, $100_2$, ... $100_i$, ..... $100_N$, mécaniquement reliées à N moyens flotteurs $200_1$, $200_2$, ..... $200_i$, .... $200_N$ constitués, par exemple, par des bouées. De façon usuelle, les sources $100_i$ (i=1, .., N) sont des canons dont le nombre peut varier de quelques unités à une dizaine, s'étalant sur une distance de 5 à 20 mètres pour une profondeur d'immersion de 5 à 10 mètres. Bien entendu, d'autres moyens flotteurs que des bouées individuelles peuvent être envisagés, tels qu'un flotteur flexible ou rigide unique.

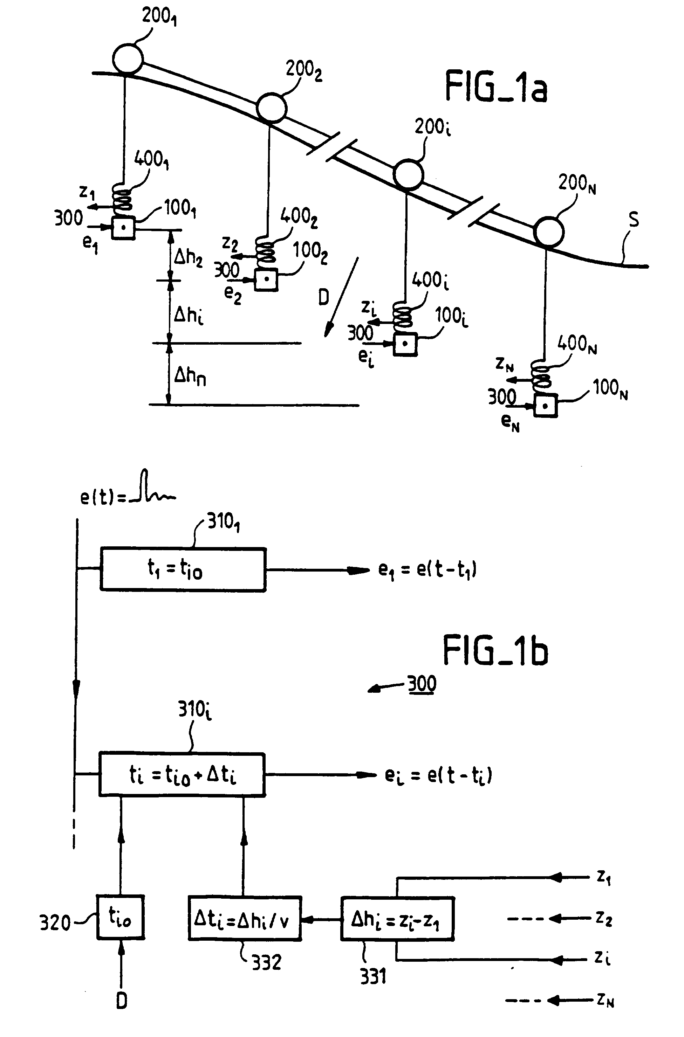

La figure 1b donne le schéma d'un circuit 300 de commande qui fournit à chaque source $100_i$ un signal d'émission $e_i$ construit à partir d'un signal e(t) de forme impulsionnelle comme l'indique la figure 1b. Pour obtenir une émission acoustique d'ensemble dans une direction D donnée, il faut appliquer aux sources $100_i$ une loi de phase caractérisée par le retard de phase $t_i$ à appliquer au signal d'émission individuel $e_i$ de chaque source par rapport au signal initial e(t). $e_i$ est donc donné par :

$$e_i = e\,(t\text{-}t_i).$$

Le retard de phase peut être défini dans l'absolu, ou de façon relative par rapport à une source de référence, par exemple la première $100_1$, auquel cas $t_1$ est pris égal à 0.

Il est possible de définir a priori, pour un sous-ensemble de sources donné, une loi de phase nominale associée à chaque direction D d'émission correspondant à la situation idéale d'une surface 5 parfaitement plane. Les retards de phase $t_{i0}$ caractéristiques de la loi de phase nominale pour une direction D donnée sont stockés dans une mémoire morte 320 et appliqués au signal de référence e(t) par des lignes $310_i$ à retard variable.

Lorsque, comme le montre la figure 1a, la surface S de l'eau n'est pas parfaitement plane mais soumise, par exemple, à une houle de grande période, les sources $100_i$, bien que situées à la même profondeur de la surface, ne se trouvent plus dans la configuration idéale qui a permis de définir la loi de phase nominale. En particulier, la position $z_i$ des sources par rapport à un axe vertical n'est plus identique. Il en résulte une erreur dans la direction d'émission réelle qu'il faut prendre en compte pour rétablir la direction d'émission souhaitée.

Conformément au mode de réalisation des figures 1a et 1b, le dispositif de l'invention comporte des capteurs $400_1$, $400_2$, ... $400_i$, .... $400_N$, disposés à proximité des sources, qui fournissent à des moyens 331, 332 de correction un signal représentatif de la position absolue $z_i$ desdites sources $100_i$. Ces moyens de correction comprennent un moyen soustracteur 331 donnant la variation de la position relative $\Delta h_i = z_i - z_1$ de la source d'ordre i par rapport, par exemple, à la source d'ordre 1. Puis, un moyen 332 de calcul de correction évalue le signal de correction $\Delta t_i$ à ajouter au retard $t_{i0}$ de phase de la loi de phase nominale pour obtenir le retard $t_i$ à appliquer au signal de référence e(t). Le signal de correction $\Delta t_i$ donné par:

$$\Delta t_i = \Delta h_i/v$$

v étant la vitesse dans l'eau des ondes acoustiques considérées, est représentatif des variations de la position relative des sources au cours des mouvements de houle subis par le dispositif.

Les capteurs $400_i$ d'attitude peuvent être des vélocimètres ou des accéléromètres mesurant respectivement la vitesse verticale ou l'accélération verticale des sources $100_i$. Par intégration simple, les vélocimètres donnent la position absolue $z_i$ à une constante près qui s'élimine lorsque le moyen soustracteur 331 effectue la différence $\Delta h_i = z_i \text{-} z_1$. De même, les accéléromètres fournissent la position absolue $z_i$ avec deux constantes d'intégration dont l'une s'élimine également par différence, la deuxième étant prise égale à zéro par un choix approprié de l'origine des temps.

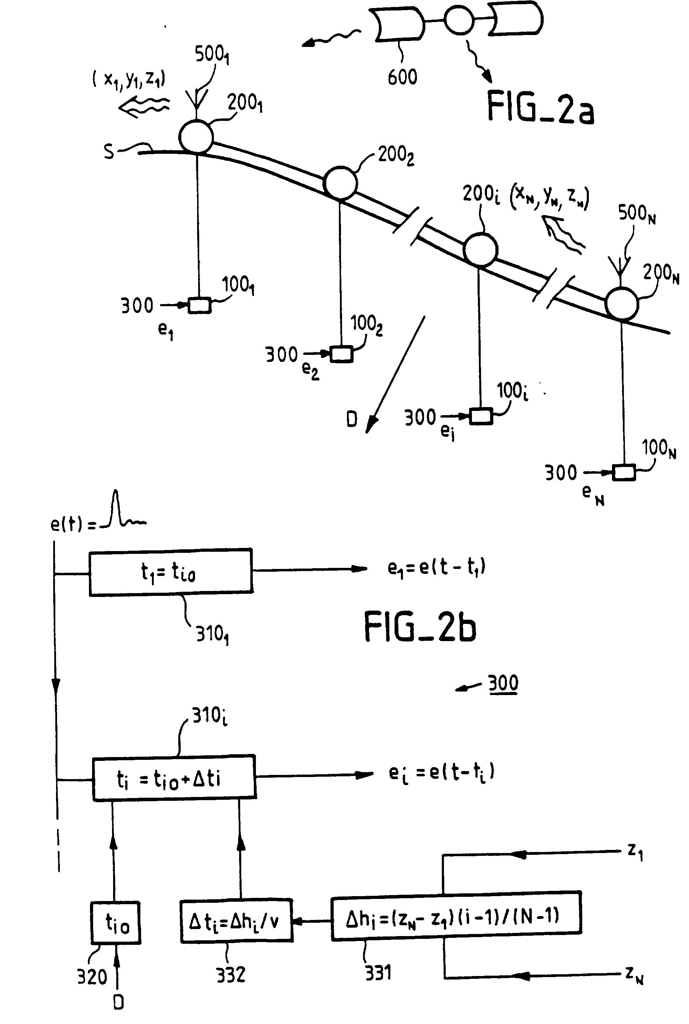

La figure 2a montre une variante de réalisation du dispositif de l'invention dans laquelle les capteurs d'attitude sont des stations $500_1$, $500_N$ d'un système de localisation disposées, par exemple, sur la première $200_1$, et la dernière $200_N$ bouées. Ledit système de localisation peut être un système satellitaire comme celui connu sous le sigle de GPS (Global Positioning System). Dans ce système, les trois coordonnées $(x_1, y_1, z_1)$ et $(x_N, y_N, z_N)$ définissant la position absolue des deux bouées $200_1$ et $200_N$ sont fournies par un réseau de satellites artificiels 600. On notera que les positions verticales $z_1$ et $z_N$ des deux bouées $200_1$ et $200_N$ sont égales, à une constante près égale à la profondeur des sources, aux positions verticales des deux sources extrêmes $100_1$ et $100_N$. On peut donc déduire la variation de la position relatives $\Delta h_N = z_N - z_1$ des deux sources extrêmes ainsi que le signal de correction $\Delta t_N = \Delta h_N/v$ à appliquer à la ligne $310_N$ à retard. Pour déterminer les signaux de cor-

rection des autres sources $100_2$, .... $100_i$, .... $100_{N-1}$, on peut faire l'hypothèse d'une distribution linéaire de la position absolue des sources. Dans ce cas, le moyen 332 de correction est un moyen d'interpolation/extrapolation qui calcule les variations $\Delta h_i$ de position relative selon la formule :

$$\Delta h_i = (z_N - z_1) \frac{i-1}{N-1}$$

On en déduit alors les signaux de correction $\Delta t_i = \Delta h_i / v$.

Sur les figures 1a et 1b, les lignes $310_i$ à retard ont été disposées en parallèle sur le signal e(t) de référence, de sorte que les retards de phase $t_i$ ont été évalués par rapport au signal $e_1$ appliqué à la première source $100_1$. Il est bien entendu que les lignes à retard pourraient tout aussi bien être placées en série, le retard de phase pour une source donnée devant alors être déterminé par rapport à la précédente.

## Revendications

1. Dispositif d'émission acoustique pour sismique marine, destiné à émettre une onde acoustique dans une direction (D) donnée, comportant, d'une part, une pluralité de sources ($100_i$) immergées, mécaniquement reliées à au moins un moyen flotteur ($200_i$), et, d'autre part, un circuit (300) de commande desdites sources comprenant une pluralité de moyens ($310_i$) de retard aptes à appliquer respectivement à chaque source un retard ($t_{io}$) de phase défini par une loi de phase nominale associée à ladite direction (D) d'émission donnée, ledit dispositif comportant au moins deux capteurs ($400_i$ ; $500_1$, $500_N$) fournissant à des moyens (331, 332) de correction dudit circuit de commande des signaux ($z_i$) représentatifs d'au moins un paramètre relatif à la position d'au moins deux desdites sources ($100_i$), lesdits moyens de correction (331, 332) fournissant aux moyens ($310_i$) de retard, en fonction des signaux et des capteurs ($400_i$ ; $500_1$, $500_N$), un signal de correction de la loi de phase nominale, caractérisé en ce que lesdits capteurs ($400_i$ ; $500_1$, $500_N$) sont des capteurs d'attitude qui fournissent aux moyens de correction (331, 332) des signaux représentatifs de la position absolue desdites sources ($100_i$), le signal de correction fourni par les moyens de correction (331, 332) aux moyens de retard ($310_i$) étant représentatif des variations ($\Delta h_i$) de la position relative desdites sources.

2. Dispositif selon la revendication 1, caractérisé en ce que, ledit dispositif comportant deux capteurs ($500_1$, $500_N$) d'attitude et une pluralité de plus de deux sources ($100_i$), lesdits moyens de correction comprennent des moyens (331) d'interpolation/extrapolation aptes à déterminer les variations ($\Delta h_i$) de la position relative des sources.

3. Dispositif selon l'une des revendications l ou 2, caractérisé en ce que lesdits capteurs ($300_i$) d'attitude sont disposés à proximité des sources ($100_i$).

4. Dispositif selon l'une des revendications l ou 2, caractérisé en ce que lesdits capteurs ($500_1$, $500_N$) d'attitude sont disposés sur le(s)dit(s) moyen(s) flotteur(s) ($200_i$, $200_N$).

5. Dispositif selon l'une quelconque des revendications 1 à 4, caractérisé en ce que lesdits capteurs ($300_i$) d'attitude sont des vélocimètres.

6. Dispositif selon l'une quelconque des revendications 1 à 4, caractérisé en ce que lesdits capteurs ($300_i$) d'attitude sont des accéléromètres.

7. Dispositif selon la revendication 4, caractérisé en ce que lesdits capteurs ($500_1$, $500_N$) d'attitude sont des stations d'un système de localisation.

## Patentansprüche

1. Akustisches Sendegerät für meeresseismische Untersuchungen, welches dafür bestimmt ist, eine akustische Welle in eine gegebene Richtung (D) zu senden, und welche zum einen mehrere eingetauchte Quellen ($100_i$), die mechanisch mit zumindest einer Schwimmereinrichtung ($200_i$) verbunden sind, und andererseits eine Steuerschaltung (300) für die Quellen umfaßt, welche mehrere Verzögerungseinrichtungen ($310_i$) aufweist, die dafür geeignet sind, jeder Quelle jeweils eine Phasenverzögerung ($t_{io}$) aufzugeben, welche durch ein der gegebenen Senderichtung (D) zugeordnetes Nominalphasengesetz festgelegt ist, wobei das Gerät mindestens zwei Sensoren ($400_i$; $500_1$, $500_N$) umfaßt, welche zu einer Korrektureinrichtung (331, 332) der Steuerschaltung Signale ($z_i$) liefern, welche zumindest einen Parameter bezüglich der Position von mindestens zwei der Quellen ($100_i$) angeben, wobei die Korrektureinrichtung (331, 332) zu der Verzögerungseinrichtung ($310_i$) in Abhängigkeit von den Signalen und den Sensoren ($400_i$; $500_1$, $500_N$) ein Signal zur Korrektur des Nominalphasengesetzes liefert, dadurch gekennzeichnet, daß die Sensoren ($400_i$; $500_i$, $500_N$) Positionssensoren sind, welche zu der Korrektureinrichtung (331, 332) Signale senden, welche die absolute Position der Quellen ($100_i$) angeben, wobei das von der Korrektureinrichtung (331, 332) zu der Verzögerungseinrichtung ($310_i$) gelieferte Korrektursignal Änderungen ($\Delta h_i$) der relativen Position der Quellen angibt.

2. Gerät nach Anspruch 1, dadurch gekennzeichnet, daß das Gerät zwei Positionssensoren ($500_1$, $500_N$) und mehr als zwei Quellen ($100_i$) aufweist, wobei die

Korrektureinrichtung eine Interpolations/Extrapolations-Einrichtung (331) umfaßt, die dafür geeignet ist, die Änderungen ($\Delta h_i$) der relativen Position der Quellen zu bestimmen.

3. Gerät nach einem der Ansprüche 1 oder 2, dadurch gekennzeichnet, daß die Positionssensoren ($300_i$) in der Nähe der Quellen ($100_i$) angeordnet sind.

4. Gerät nach einem der Ansprüche 1 oder 2, dadurch gekennzeichnet, daß die Positionssensoren ($500_1$, $500_N$) auf der Schwimmereinrichtung oder den Schwimmereinrichtungen ($200_i$, $200_N$) angeordnet sind.

5. Gerät nach einem der Ansprüche 1 bis 4, dadurch gekennzeichnet, daß die Positionssensoren ($300_i$) Geschwindigkeitsmesser sind.

6. Gerät nach einem der Ansprüche 1 bis 4, dadurch gekennzeichnet, daß die Positionssensoren ($300_i$) Beschleunigungsmesser sind.

7. Gerät nach Anspruch 4, dadurch gekennzeichnet, daß die Positionssensoren ($500_1$, $500_N$) Stationen eines Ortsbestimmungssystems sind.

**Claims**

1. An acoustic emission system for seismic surveying at sea, for the purpose of emitting a soundwave in a given direction (D), the system comprising firstly a plurality of immersed sources ($100_i$) mechanically connected to at least one float means ($200_i$), and secondly a control circuit (300) for controlling said sources and comprising a plurality of delay means ($310_i$) suitable for applying respective phase delays ($t_{io}$) to each of the sources, said delays being defined by a nominal phase law associated with said given emission direction (D), said system including at least two sensors ($400_i$; $500_i$, $500_N$) providing signals ($z_i$) representative of at least one parameter relating to the positions of at least two of said sources ($100_i$) and delivering said signals to correction means (331, 332) of said control circuit, said correction means (331, 332) responding to the signals and the sensors ($400_i$; $500_i$, $500_N$) by providing the delay means ($310_i$) with a signal for correcting the nominal phase law, the system being characterized in that said sensors ($400_i$; $500_i$, $500_N$) are attitude sensors which provide the correction means (331, 332) with signals representative of the absolute positions of said sources ($100_i$), said correction signal provided by the correction means (331, 332) to the delay means ($310_i$) being representative of variations ($\Delta h_i$) in the relative positions of said sources.

2. A system according to claim 1, characterized in that said system includes two attitude sensors ($500_1$, $500_N$) and a plurality of more than two sources ($100_i$), said correction means including interpolation/extrapolation means (331) suitable for determining the variations ($\Delta h_i$) in the relative positions of the sources.

3. A system according to claim 1 or 2, characterized in that said attitude sensors ($300_i$) are disposed in the proximity of the sources ($100_i$).

4. A system according to claim 1 or 2, characterized in that said attitude sensors ($500_1$, $500_N$) are disposed on said float means ($200_i$, $200_N$).

5. A system according to any one of claims 1 to 4, characterized in that said attitude sensors ($300_i$) are velocity meters.

6. A system according to any one of claims 1 to 4, characterized in that attitude sensors ($300_i$) are accelerometers.

7. A system according to claim 4, characterized in that said attitude sensors ($500_1$, $500_N$) are stations in a positioning system.

FIG_1a

FIG_1b

$e(t) = $

$t_1 = t_{i0}$    $310_1$    $e_1 = e(t - t_1)$

$t_i = t_{i0} + \Delta t_i$    $310_i$    $e_i = e(t - t_i)$

$320$   $t_{i0}$

$\Delta t_i = \Delta h_i / v$   $332$

$\Delta h_i = z_i - z_1$   $331$

$z_1$

$z_2$

$z_i$

$z_N$

$D$

$FIG\_2a$

$(x_1, y_1, z_1)$

$500_1$

$200_1$

S

$200_2$

$200_i$  $(x_N, y_N, z_N)$

$500_N$

$200_N$

$300 \rightarrow$  $100_1$  $e_1$

$100_2$

$300 \rightarrow$  $e_2$

D

$300 \rightarrow$  $100_i$  $e_i$

$100_N$

$300 \rightarrow$  $e_N$

600

$e(t) = $

| $t_1 = t_{io}$ | $\rightarrow$ | $e_1 = e(t - t_1)$ |

$310_1$

$FIG\_2b$

$\leftarrow \underline{300}$

$310_i$

| $t_i = t_{io} + \Delta t_i$ | $\rightarrow$ | $e_i = e(t - t_i)$ |

$z_1$

| $t_{io}$ | | $\Delta t_i = \Delta h_i / v$ | $\leftarrow$ | $\Delta h_i = (z_N - z_1)(i-1)/(N-1)$ |

320

D

332

331

$z_N$